# EUROPÄISCHE PATENTANMELDUNG

(11) **EP 1 408 175 A1**
(43) Veröffentlichungstag der Anmeldung: **14.04.2004**
(21) Anmeldenummer: 03022081.8
(22) Anmeldetag: 02.10.2003
(51) Int. Cl.: E04F 17/04, H02G 3/04, E04F 17/08, F16L 5/04

(54) **Plattenförmiges Formteil und Luft- oder Kabelkanalbauteil**

(30) Priorität: 11.10.2002 DE 20215633 U
(71) Anmelder: Thermax Brandschutzbauteile Gesellschaft m.b.H., 3300 Amstetten/Greinsfurth (AT)
(72) Erfinder: Becker, Herbert, 46149 Oberhausen (DE); Ricken, Werner, 46286 Dorsten (DE)
(74) Vertreter: Gesthuysen, von Rohr & Eggert

(57) **Zusammenfassung**

Dargestellt und beschrieben ist ein plattenförmiges Formteil (1) aus nicht brennbarem bzw. feuerfestem Material für ein mindestens einen Winkel aufweisendes Luft- oder Kabelkanalbauteil (6) sowie ein einen Winkel aufweisendes Luftoder Kabelkanalbauteil (6), mit einer Deckelplatte (7), mit einer Bodenplatte (8) und mit mehreren Seitenplatten (9, 10, 11, 12) aus nicht brennbarem bzw. feuerfestem Material.

Der Zuschnitt von Luft- oder Kabelkanalbauteilen (6) vor Ort wird dadurch erleichtert, daß das Formteil (1) mindestens drei Seiten (2, 3, 4) aufweist, wobei zwei Seiten (2, 3) unter einem Winkel α kleiner 90° zueinander verlaufen bzw. dadurch, daß zwischen mindestens zwei aneinandergrenzenden Seitenplatten (9, 10, 11, 12) oder angrenzend an mindestens eine Seitenplatte (11) mindestens ein entsprechendes Formteil (1) angeordnet ist.

## Beschreibung

Die Erfindung betrifft ein plattenförmiges Formteil aus nicht brennbarem bzw. feuerfestem Material für ein mindestens einen Winkel aufweisendes Luft- oder Kabelkanalbauteil sowie ein mindestens einen Winkel aufweisendes Luft- oder Kabelkanalbauteil, mit einer Deckelplatte, mit einer Bodenplatte und mit mehreren Seitenplatten aus nicht brennbarem bzw. feuerfestem Material. Darüber hinaus betrifft die Erfindung noch ein Modulsystem bestehend aus einer Mehrzahl von Formteilen aus nicht brennbarem bzw. feuerfestem Material.

Luft- bzw. Lüftungskanäle mit im wesentlichen eckigem Durchgangsquerschnitt werden zur Führung der Zu- und Abluft zur Kühlung, Klimatisierung und Entrauchung von Gebäuden eingesetzt. Die einzelnen Kanalabschnitte werden dabei aus Kanalbauteilen zusammengesetzt, wobei sowohl gerade als auch abgewinkelte, d. h. einen Winkel aufweisende Kanalbauteile verwendet werden. Neben Luft- bzw. Lüftungskanälen werden in Gebäuden auch Kabelkanäle verlegt, die ebenfalls aus geraden und abgewinkelten Kanalbauteilen zusammengesetzt sind.

Im Rahmen der vorliegenden Erfindung soll unter einem Luftkanal sowohl ein selbständiger Entrauchungs- oder Lüftungskanal als auch eine Blech- oder Kunststoffkanalbekleidung, die zur Feuersicherung eines Blech- oder Kunststoffkanals verwendet wird, verstanden werden. Ebenso sollen unter dem Begriff Kabelkanal sowohl sogenannte I-Kanäle (Installationskanäle) als auch sogenannte E-Kanäle verstanden werden. I-Kanäle sind dabei dafür ausgelegt, umliegende Räume beim Auftreten eines Kabelbrandes im Inneren des Kanals zu schützen. Derartige I-Kanäle bieten somit einen Brandschutz von innen nach außen. Im Unterschied dazu schützen sogenannte E-Kanäle die im Kanal befindlichen Kabel bei einem Brand im umliegenden Raum, so daß der Funktionserhalt der Kabel während der angegebenen Feuerwiderstandsdauer gewährleistet ist.

Luft- oder Kabelkanälen ist gemeinsam, daß sie aus einem nicht brennbarem bzw. feuerfestem Material bestehen oder ein derartiges Material aufweisen, wie dies bei Blechkanalbekleidungen der Fall ist. Derartige Kanäle bzw. Bekleidungen werden in der Regel aus Brandschutzplatten oder Baustoffplatten zusammengesetzt, wobei die Brandschutz- bzw. Baustoffplatten beispielsweise aus geblähten Materialen wie Vermiculit, Perlit oder Blähton sowie aus Bindemitteln und anorganischen oder organischen Komponenten bestehen.

Die Brandschutz- bzw. Baustoffplatten werden in der Regel in genormten Plattengrößen angeboten und erst vor Ort mit Hilfe entsprechender Kleber, Klammem und/oder Schrauben zu den jeweiligen Luft- oder Kabelkanalbauteilen zusammengesetzt. Je nach den erforderlichen Abmessungen der Kanäle werden dabei vor Ort die einzelnen Brandschutz- bzw. Baustoffplatten zurechtgeschnitten. Während dies für gerade Kanalbauteile noch relativ einfach und mit der erforderlichen Genauigkeit erfolgen kann, gibt es bei der Herstellung von abgewikkelten Kanalbauteilen Probleme beim Zuschnitt der Brandschutzplatten, wenn einzelne Brandschutzplatten auf Gehrung gefügt werden müssen. In diesen Fällen ist es dann schwierig die erforderliche Winkelgenauigkeit beim Zuschneiden vor Ort zu gewährleisten, so daß die Luft- bzw. Lüftungskanäle und die Kabelkanäle überall dort, wo eine Richtungsänderung vorgenommen werden muß, häufig Schwachstellen aufweisen oder es aufgrund von ungenauen Zuschnitten zu einer groß Anzahl von Ausschuß kommt. Jedenfalls ist der Zuschnitt derartiger Brandschutz- bzw. Baustoffplatten, die nicht nur 90° Kanten aufweisen, zeitaufwendig und fehleranfällig.

Aus der DE 100 39 859 A1 ist ein Bauteil für Lüftungskanäle zur Be- und Entlüftung von Gebäuden bekannt, das eine wärmeisolierend, feuerbeständig und schalldämmend ausgestaltete Wandung aufweist. Zur Herstellung eines rechtekkigen Lüftungskanals ist das einstückige Wandungsteil dabei auf der Innenseite mit V-förmigen Einschnitten sowie mit zwei auf Gehrung geschnittenen Außenkanten versehen. Mit diesem bekannten Lüftungskanalbauteil lassen sich zum einen nur gerade Lüftungskanäle realisieren, zum anderen ist auch für jeden Kanalquerschnitt ein vorher entsprechend zurechtgeschnittenes Wandungsteil erforderlich.

Der Erfindung liegt daher die Aufgabe zugrunde, den Zuschnitt von Luft- oder Kabelkanalbauteilen vor Ort zu erleichtern, insbesondere wenn abgewinkelte Luft- oder Kabelkanalbauteile benötigt werden, die mindestens einen Winkel aufweisen.

Die obige Aufgabe wird erfindungsgemäß durch ein Formteil gemäß Anspruch 1, ein Modulsystem gemäß Anspruch 6 oder ein Luft- oder Kabelkanalbauteil gemäß Anspruch 9 gelöst. Vorteilhafte Weiterbildungen sind Gegenstand der Unteransprüche.

Diese Aufgabe ist gemäß der ersten Lehre der Erfindung zunächst dadurch gelöst, daß ein eingangs beschriebenes plattenförmiges Formteil aus einem nicht brennbaren Material vorgesehen ist, das mindestens drei Seiten aufweist, wobei zwei Seiten unter einem Winkel α kleiner 90° zueinander verlaufen. Das so gestaltete Formteil kann dabei im Vergleich zu den ansonsten benutzten rechteckigen Brandschutzplatten bzw. Baustoffplatten wesentlich geringere Längenabmessungen aufweisen. Dies ermöglich es, derartige Formteile vorgefertigt vor Ort zur Verfügung zu stellen. Mit Hilfe zweier derartiger Formteile ist es nun möglich, Luft- oder Kabelkanalbauteile, die einen Winkel aufweisen, zusammenzusetzen, bei denen die eigentlichen Seitenplatten jeweils nur 90° Kanten aufweisen, d.h. nicht auf Gehrung geschnitten werden müssen. Somit sind vor Ort nur noch Zuschnitte von Seitenplatten erforderlich, deren Seiten rechtwinklig zueinander verlaufen.

Daher betrifft die Erfindung auch ein eingangs beschriebenes einen Winkel aufweisendes Luft- oder Kabelkanalbauteil, bei dem zwischen mindestens zwei aneinandergrenzenden Seitenplatten oder angrenzend an mindestens eine Seitenplatte mindestens ein Formteil angeordnet ist, wobei das Formteil mindestens drei Seiten aufweist von denen zwei Seiten unter einem Winkel α kleiner 90° zueinander verlaufen, so daß die Seitenplatten gehrungsfrei miteinander verbunden sind.

Grundsätzlich gibt es eine Vielzahl von Möglichkeiten, das erfindungsgemäße Formteil auszugestalten, wobei die vorliegende Erfindung insbesondere unabhängig vom verwendeten Material des Formteils ist. Um die Anzahl der insgesamt zur Verfügung zu stellenden Formteile zu begrenzen, und dennoch möglichst alle in der Praxis benötigten Formen der Luft- oder Kabelkanalbauteile realisieren zu können, ist das Formteil vorteilhafterweise so ausgestaltet, daß der Winkel α zwischen den beiden Seiten um einen festen Wert β, beispielsweise um 7,5° oder 15°, oder ein Mehrfaches des Wertes β kleiner als 90° ist. Es hat sich herausgestellt, daß sich mit einer derartig begrenzten Anzahl an verschiedenen Formteile, die jeweils einen geeigneten um einen Wert β, beispielsweise um 7,5° oder 15°, verschiedenen Winkel aufweisen, alle in der Praxis benötigten Formen von Luft- oder Kabelkanalbauteilen realisieren lassen.

Die Erfindung betrifft daher auch ein eingangs beschriebenes Modulsystem bestehend aus einer Mehrzahl von Formteilen aus nicht brennbarem bzw. feuerfestem Material für mehrere mindestens einen Winkel aufweisende Luft- oder Kabelkanalbauteile, bei dem die Formteile mindestens drei Seiten aufweisen, wobei mindestens zwei Seiten der Formteile unter einem Winkel α kleiner 90° zueinander verlaufen, wobei in dem Modulsystem mehrere Formteile mit unterschiedlichen Winkeln α vorgesehen sind. Durch ein derartiges Modulsystem wird dem Anwender somit ein Satz von Formteilen zur Verfügung gestellt, mit deren Hilfe eine Mehrzahl unterschiedlicher, jeweils mindestens einen Winkel aufweisender Luft- oder Kabelkanalbauteile zusammengesetzt werden können, wobei die einzelnen Seitenplatten der Luft- oder Kabelkanalbauteile jeweils nur 90° Kanten aufweisen müssen. Die einzelnen Seitenplatten können dabei entsprechend der erforderlichen Größe des abgewinkelten Luft- oder Kabelkanalbauteils einfach vor Ort zugeschnitten werden, ohne daß genaue Winkelvorgaben eingehalten werden müssen.

Durch die Verwendung des erfindungsgemäßen Formteils bzw. des aus mehreren unterschiedlichen Formteilen bestehenden Modulsystems lassen sich somit auf einfache Art und Weise unterschiedliche Luft- oder Kabelkanalbauteil schnell und einfach direkt vor Ort, d. h. auf der Baustelle, zusammenbauen. Das Formteil, das Modulsystem und das Luft- oder Kabelkanalbauteil stellen dabei selbstständig verkehrsfähige Gegenstände dar, denen die erfinderische Grundidee gemeinsam ist, daß mindestens zwei Seiten der Formteile unter einem Winkel α kleiner 90° zueinander verlaufen.

Im einzelnen gibt es nun eine Vielzahl von Möglichkeiten, das erfindungsgemäße Formteil, das erfindungsgemäße Modulsystem und das erfindungsgemäße Luft- oder Kabelkanalbauteil auszugestalten und weiterzubilden. Dazu wird verwiesen einerseits auf die den Patentansprüchen 1, 6 und 9 nachgeordneten Patentansprüche, andererseits auf die Beschreibung bevorzugte Ausführungsbeispiele in Verbindung mit der Zeichnung. In der Zeichnung zeigen
- Fig. 1: verschiedene Ausführungsbeispiele eines erfindungsgemäßen Formteils,
- Fig. 2: zwei Darstellungen eines ersten Ausführungsbeispiels eines erfindungsgemäßen Luft- oder Kabelkanalbauteils, im Schnitt und in perspektivischer Darstellung, und
- Fig. 3 - 10: weitere Ausführungsbeispiele eines erfindungsgemäßen Luft- oder Kabelkanalbauteils, jeweils im Schnitt und in perspektivischer Darstellung.

Für gleiche oder ähnliche Teile werden die selben Bezugszeichen verwendet, und es ergeben sich entsprechende bzw. vergleichbare Vorteile und Eigenschaften, auch wenn eine wiederholte Beschreibung weggelassen ist.

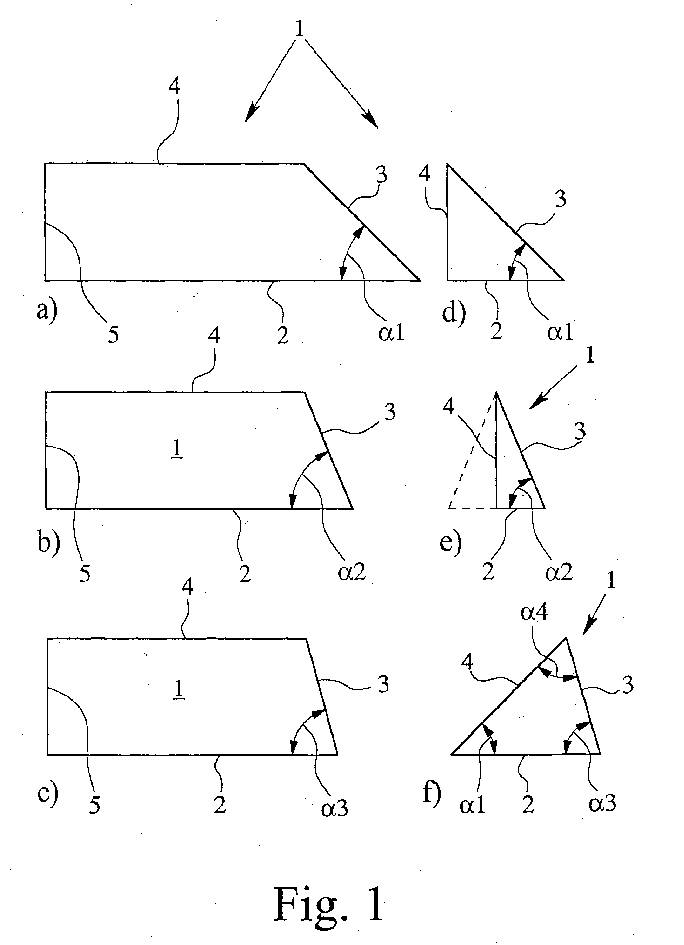

In Fig. 1 sind insgesamt sechs verschiedene Ausführungsbeispiele eines erfindungsgemäßen Formteils 1 dargestellt, wobei bei den Ausführungsbeispielen gemäß den Fig. 1a) - c) das Formteil 1 jeweils vier Seiten 2, 3, 4, 5 aufweist, während bei den Ausführungsbeispielen gemäß den Fig. 1d) - f) das Formteil 1 nur drei Seiten 2, 3, 4 aufweist. Die plattenförmigen Formteile 1 gemäß den Fig. 1 a) - c) wiesen somit eine viereckige Grundfläche auf, während die Formteile 1 gemäß den Fig. 1d) - f) eine dreieckige Grundform aufweist.

Der Winkel α zwischen den beiden Seiten 2 und 3 ist bei allen Ausführungsformen kleiner 90°. Im einzelnen beträgt der Winkel α₁ zwischen den Seiten 2 und 3 bei den beiden Formteilen 1 gemäß Fig. 1a) und Fig. 1d) 45°; der Winkel α₂ zwischen den Seiten 2 und 3 bei den Ausführungsformen gemäß den Figuren 1b) und 1e) 67,5° und der Winkel α₃ zwischen den beiden Seiten 2 und 3 bei den Formteilen 1 gemäß Fig. 1c) und Fig. 1f) 75°. Der Wert β um den die Winkel α₁, α₂ und α₃ kleiner als 90° sind beträgt somit ein Vielfaches von 7.5°.

Bei den Ausführungsformen der Formteile 1 gemäß den Fig. 1a) - c) verlaufen die beiden Seiten 2 und 4 parallel zueinander und beide Seiten 2, 4 weisen mit der vierten Seite 5 jeweils einen Winkel von 90° auf. Während bei den Formteilen 1 gemäß den Fig. 1d) und 1e) die beiden Seiten 2 und 4 ebenfalls unter einem rechten Winkel zueinander verlaufen, verlaufen bei dem Formteil 1 gemäß Fig. 1f) alle drei Seiten 2, 3, 4 unter einem Winkel α kleiner 90° zueinander. Der Winkel α₄ zwischen den beiden Seiten 3 und 4 beträgt dabei 60°.

Bei den Formteilen 1 gemäß den Fig. 1a) - c) weist die Seite 4 eine Länge von ca. 100 mm und die Seite 5 eine Länge von 45 mm auf. Selbstverständlich sind auch andere Abmessungen der Seiten 4 und 5 und damit auch der Seiten 2 und 3 möglich, wobei sowohl größere als auch kleinere Abmessungen möglich sind. Typischerweise ist die Seite 4 jedoch nicht länger als 1200 mm.

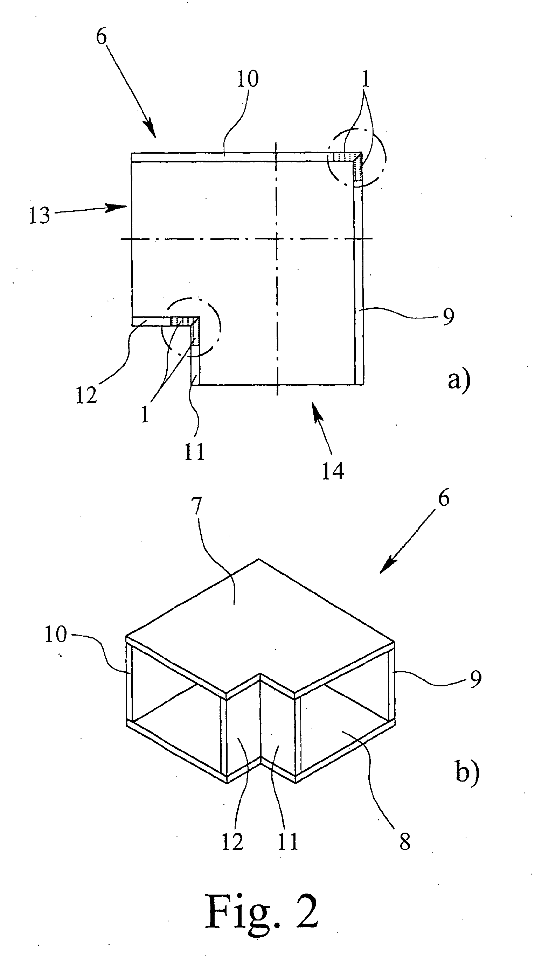

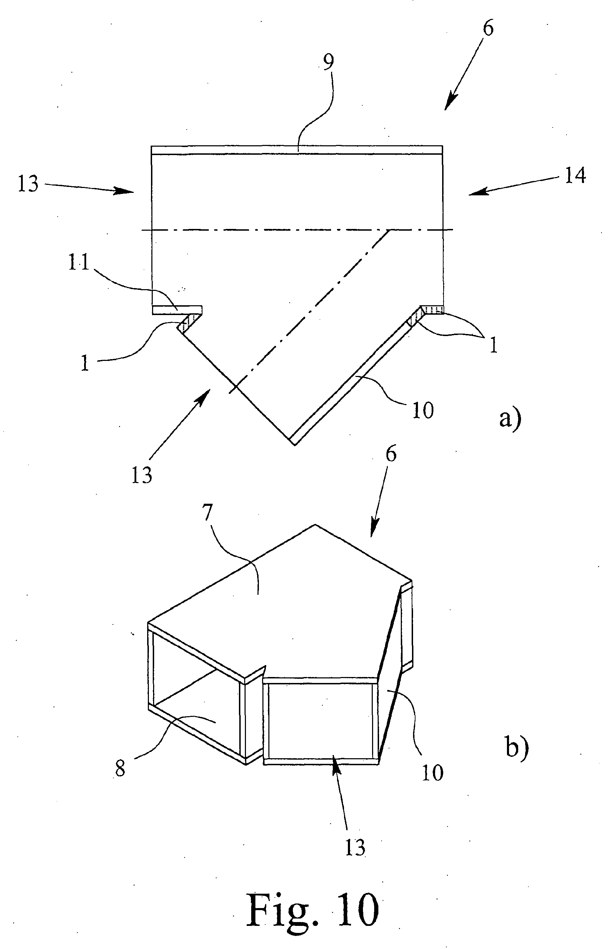

Die Fig. 2 - 10 zeigen verschiedene Ausführungsbeispiele eines erfindungsgemäßen Luft- oder Kabelkanalbauteils 6, wobei allen Luft- oder Kabelkanalbauteilen 6 gemeinsam ist, daß sie eine Deckelplatte 7, eine Bodenplatte 8 und mehrere Seitenplatten 9, 10, 11 und 12 aufweisen. Darüber hinaus sind zwischen einzelnen Seitenplatten 9, 10, 11, 12 oder angrenzend an mindestens eine Seitenplatte 9, 10, 11, 12 mindestens ein Formteil 1 angeordnet. Bei den in den Fig. 2 - 9 dargestellten Ausführungsbeispielen sind dabei zwischen zwei aneinandergrenzenden Seitenplatten 9, 10 oder 11, 12 stets zwei Formteile 1 angeordnet. Wie jedoch beispielsweise aus dem Ausführungsbeispiel gemäß Fig. 10 entnommen werden kann, ist es auch möglich, zwischen zwei Seitenteilen nur ein Formteil 1 anzuordnen. Allen Luft- oder Kabelkanalbauteilen 6 ist gemeinsam, daß die Seitenplatten 9, 10, 11, 12 jeweils nur 90° Kanten aufweisen und daß die Luft- oder Kabelkanalbauteile 6 mindestens einen Winkel aufweisen.

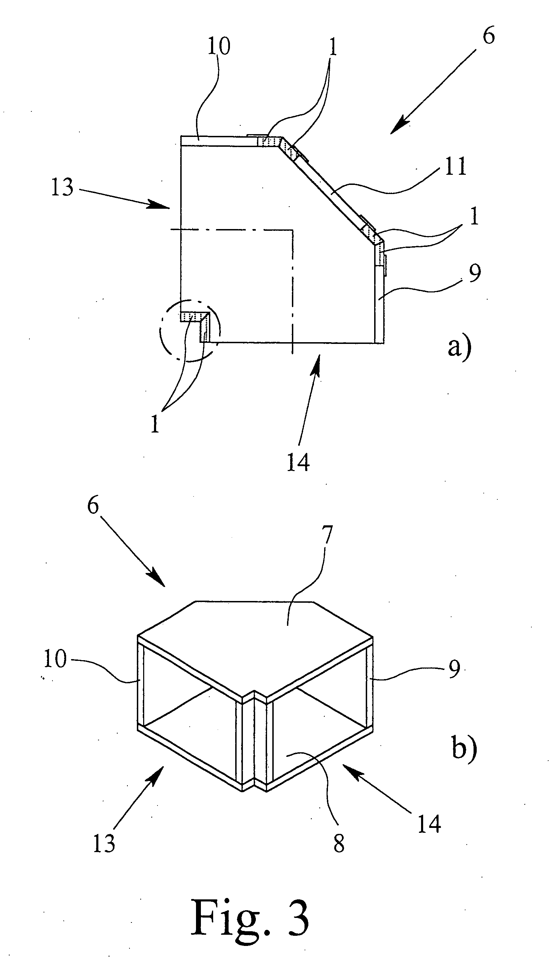

Bei dem Ausführungsbeispiel eines erfmdungsgemäßen Luft- oder Kabelkanalbauteils 6 gemäß den Fig. 2 und 3 verläuft der Kanaleingang 13 unter einem Winkel von 90° zum Kanalausgang 14. Es ist jedoch auch möglich, daß der Winkel zwischen dem Kanaleingang 13 und dem Kanalausgang 14 größer (vgl.

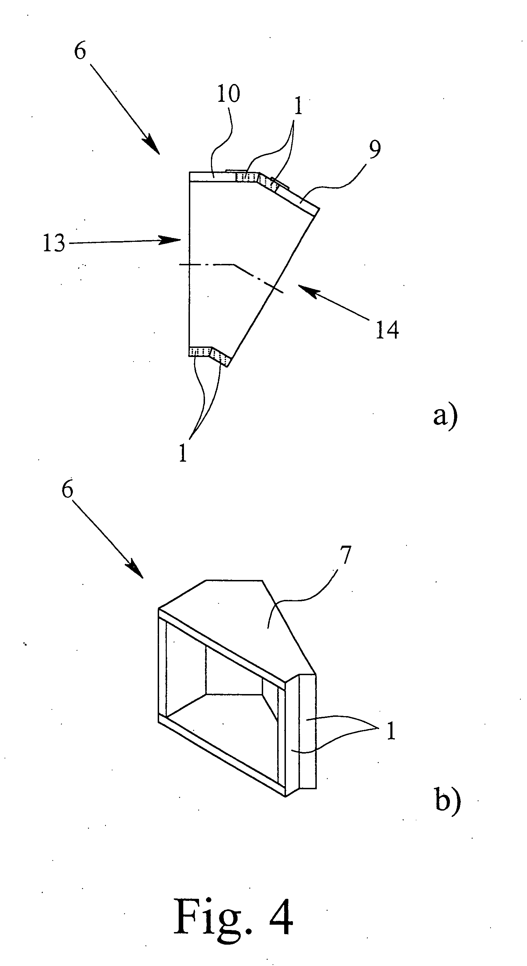

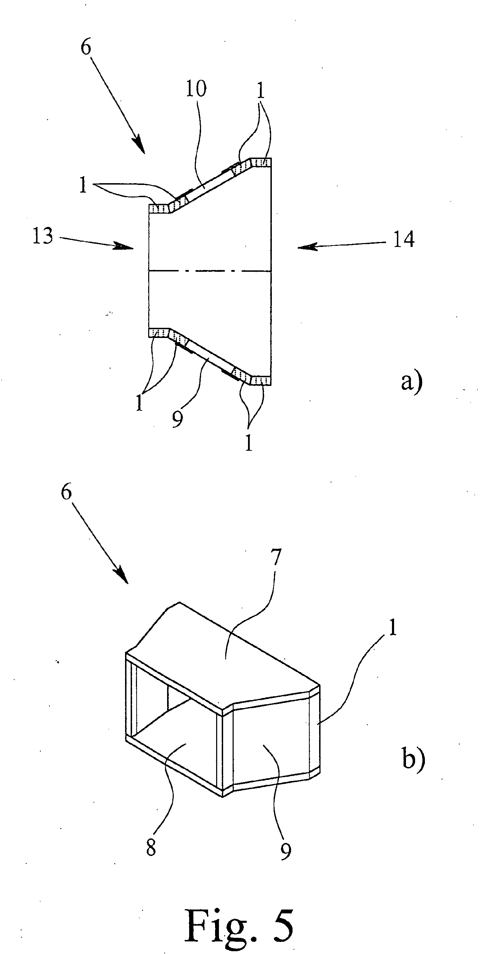

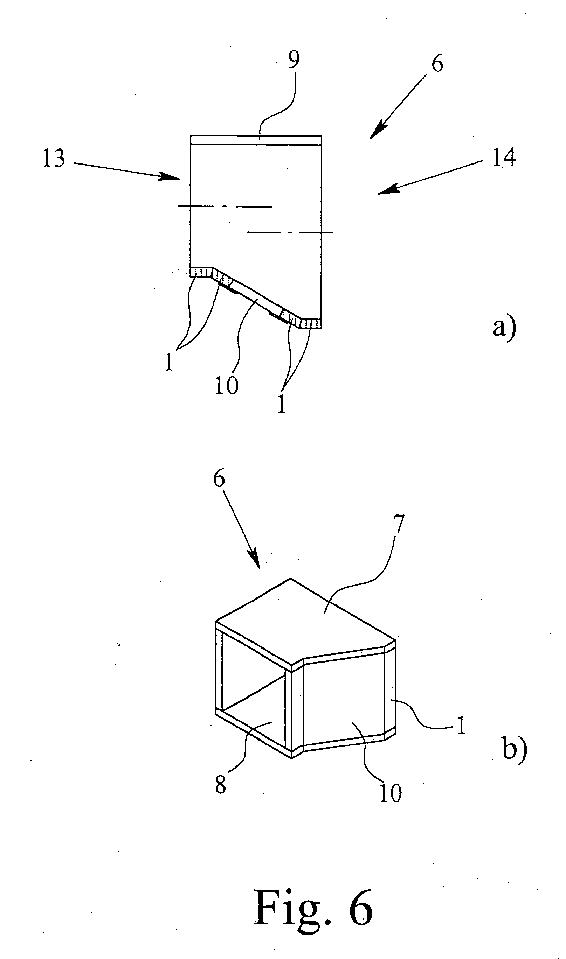

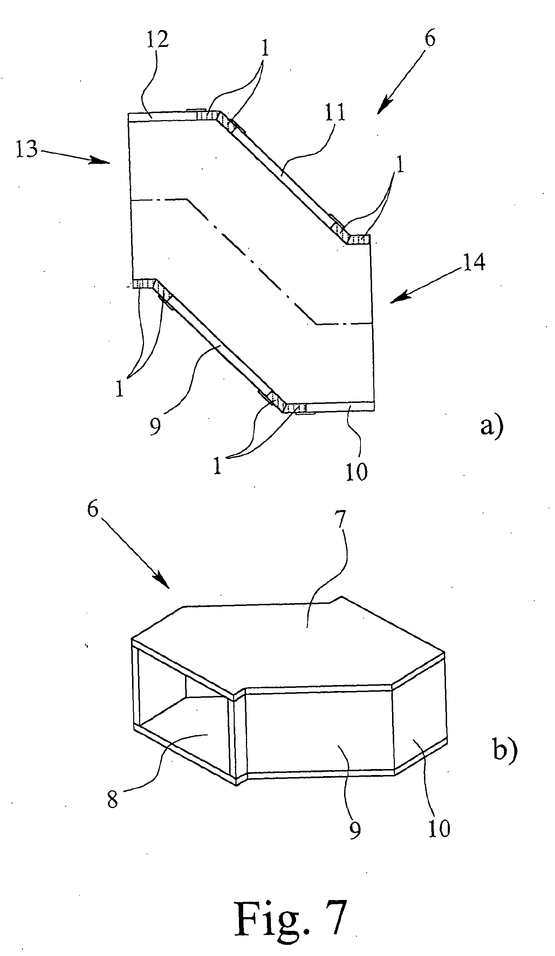

Fig. 4) oder kleiner (vgl. Fig. 10) als 90° ist. Ebenso kann ein erfindungsgemäßes Luft- oder Kabelkanalbauteil 6 eine derartige Gestalt aufweisen, daß der Kanaleingang 13 einen kleineren Kanalquerschnitt als der Kanalausgang 14 aufweist (Fig. 5 und 6). Dabei kann die Mitte des Kanaleingang 13 entweder axial zur Mitte des Kanalausgangs 14 (Fig. 5) oder versetzt zur Mitte des Kanalausgangs 14 (Fig. 6) ausgerichtet sein. Auch können der Kanaleingang 13 und der Kanalausgang 14 insgesamt axial zueinander versetzt sein, wie dies bei dem Luft- oder Kabelkanalbauteil 6 gemäß Fig. 7 der Fall ist.

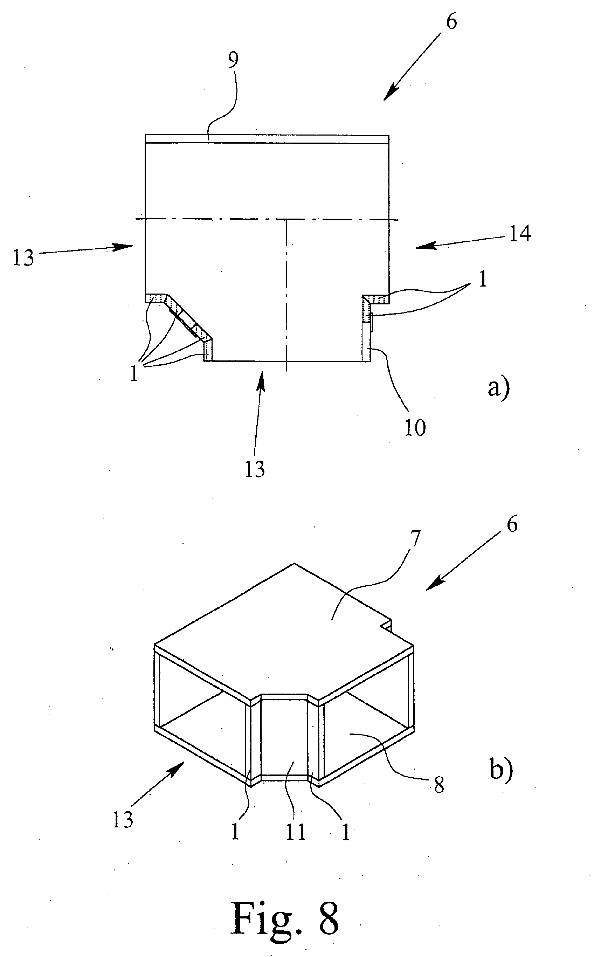

Fig. 8 zeigt ein Ausführungsbeispiel eines Luft- oder Kabelkanalbauteils 6 mit einer etwa T-förmigen Grundfläche. Durch ein derartiges Luft- oder Kabelkanalbauteil 6 ist die Verbindung eines ersten Luft- oder Kabelkanals mit einem im wesentlichen senkrecht dazu verlaufenden zweiten Luft- oder Kabelkanal möglich. Fig. 10 zeigt ein Ausführungsbeispiel eines Luft- oder Kabelkanalbauteils 6 mit einer etwa V-förmigen Grundfläche, das ebenfalls zwei Kanaleingänge 13 und einen Kanalausgang 14 aufweist, wobei jedoch die beiden Luft- oder Kabelkanäle unter einem Winkel kleiner 90° aufeinander treffen.

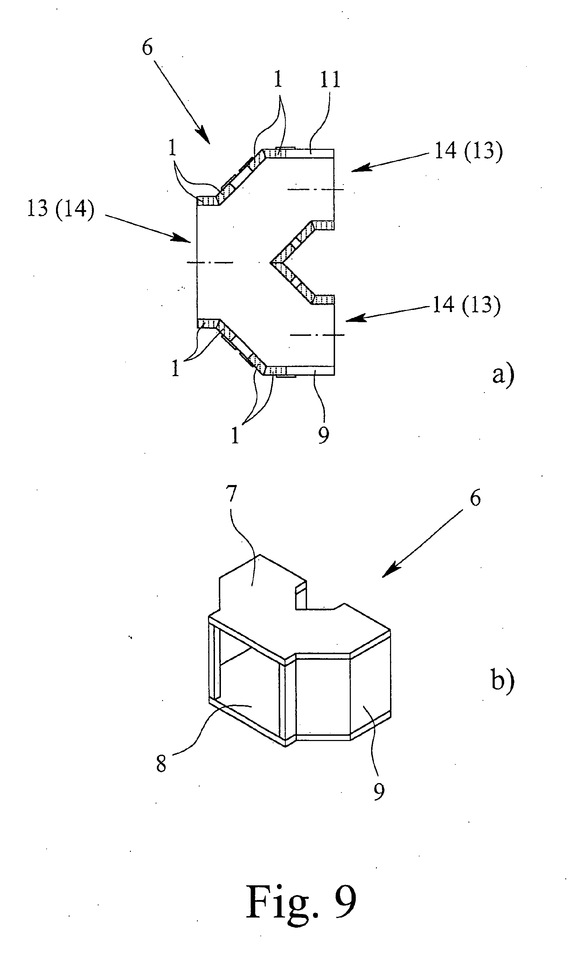

Schließlich zeigt Fig. 9 ein Ausführungsbeispiel eines erfmdungsgemäßen Luftoder Kabelkanals 6, mit dessen Hilfe ein ankommender Luft- oder Kabelkanal auf zwei parallel verlaufende abgehende Luft- oder Kabelkanäle geführt werden kann bzw. zwei parallel ankommende Luft- oder Kabelkanäle zu einem Luftoder Kabelkanal zusammengefaßt werden können. Je nach Betrachtungsrichtung bzw. nach Strömungsrichtung weist das Luft- oder Kabelkanalbauteil 6 somit einen Kanaleingang 13 und zwei Kanalausgang 14 oder zwei Kanaleingänge 13 und einen Kanalausgang 14 auf.

Trotz der Vielzahl der in den Fig. 2 - 10 dargestellten verschiedenen Luft- oder Kabelkanalbauteile 6 sind nur eine sehr begrenzte Anzahl von verschiedenen Formteilen 1 erforderlich, nämlich nur die in den Fig. 1a) - c) dargestellten Formteile 1 mit den Winkeln α₁ = 45°, α₂ = 67,5° und α₃ = 75°. Somit kann durch einen Modulsystem mit einer nur begrenzten Anzahl von verschiedenen Formteilen 1 eine große Anzahl von jeweils eine unterschiedliche Form aufweisenden Luft- oder Kabelkanalbauteilen 6 unter Verwendung lediglich 90° Kanten aufweisenden Seitenteilen 9, 10, 11, 12 zusammengesetzt werden. Die Verbindung der Formteile 1 mit den Seitenplatten 9, 10, 11, 12 erfolgte dabei ― wie im Stand der Technik üblich ― durch Verkleben und gegebenenfalls zusätzlich oder alternativ durch Klammern, Verschrauben oder Nageln.

In einem Modulsystem mit mehreren verschiedenen Formteilen 1 sind vorteilhafterweise die Formteile 1 mit unterschiedlichen Winkeln α₁, α₂, und α₃ unterschiedlich gekennzeichnet. Darüber hinaus können in einem derartigen Modulsystem auch direkt Skizzen verschiedener Luft- oder Kabelkanalbauteile 6 mit Angabe der jeweils benötigten Längenabmessungen für die vor Ort noch zuzuschneidenden Seitenplatten vorhanden sein, wobei bei den Längenabmessungen bereits die Abmessungen der jeweiligen Formteile 1 berücksichtigt ist. Insbesondere können in dem Modulssystem Schablonen für die vor Ort noch zuzuschneidenden verschiednen Seitenplatten vorhanden sein.

## Patentansprüche

1. Plattenförmiges Formteil aus nicht brennbarem bzw. feuerfestem Material für ein mindestens einen Winkel aufweisendes Luft- oder Kabelkanalbauteil,
**dadurch gekennzeichnet,**
**daß** das Formteil (1) mindestens drei Seiten (2, 3, 4) aufweist, wobei zwei Seiten (2, 3) unter einem Winkel α kleiner 90° zueinander verlaufen.

2. Formteil nach Anspruch 1, **dadurch gekennzeichnet, daß** der Winkel α zwischen den beiden Seiten (2, 3) um einen festen Winkel β, insbesondere um 7,5°, oder ein Mehrfaches von dem festen Winkel β kleiner als 90° ist.

3. Formteil mit drei Seiten (2, 3, 4) nach Anspruch 1 oder 2, **dadurch gekennzeichnet, daß** zwei Seiten (2, 4) unter einem Winkel von 90° zueinander verlaufen.

4. Formteil mit drei Seiten (2, 3, 4) nach Anspruch 1 oder 2, **dadurch gekennzeichnet, daß** alle Seiten (2, 3, 4) unter einem Winkel (α₁, α₂, α₄) kleiner 90° zueinander verlaufen.

5. Formteil mit vier Seiten (2, 3, 4, 5) nach Anspruch 1 oder 2, **dadurch gekennzeichnet, daß** zwei Seiten (2, 4) parallel zueinander verlaufen und diese beiden Seiten (2, 4) mit der vierten Seiten (5) jeweils einen Winkel von 90° aufweisen.

6. Modulsystem bestehend aus einer Mehrzahl von Formteilen (1) aus nicht brennbarem bzw. feuerfestem Material für mehrere mindestens einen Winkel aufweisende Luft- oder Kabelkanalbauteile, insbesondere nach einem der Ansprüche 1 bis 5,
**dadurch gekennzeichnet,**
**daß** die Formteile (1) mindestens drei Seiten (2, 3, 4) aufweisen,
**daß** mindestens zwei Seiten (2, 3) der Formteile (1) unter einem Winkel α kleiner 90° zueinander verlaufen, und
**daß** mehrere Formteile (1) mit unterschiedlichen Winkel α vorgesehen sind.

7. Modulsystem nach Anspruch 6, **dadurch gekennzeichnet, daß** je mindestens ein Formteil (1) mit einem Winkel α₁ = 45°, α₂ = 67,5° und α₃ = 75° vorgesehen ist.

8. Modulsystem nach Anspruch 7, **dadurch gekennzeichnet, daß** Formteile (1) mit unterschiedlichen Winkeln α unterschiedlich gekennzeichnet sind.

9. Einen Winkel aufweisendes Luft- oder Kabelkanalbauteil, mit einer Deckelplatte (7), mit einer Bodenplatte (8) und mit mehreren Seitenplatten (9, 10, 11, 12) aus nicht brennbarem bzw. feuerfestem Material,
**dadurch gekennzeichnet,**
**daß** zwischen mindestens zwei aneinandergrenzenden Seitenplatten (9, 10, 11, 12) oder angrenzend an mindestens eine Seitenplatte (11) mindestens ein Formteil (1) angeordnet ist,
**daß** das Formteil (1) mindestens drei Seiten (2, 3, 4) aufweist, wobei zwei Seiten (2, 3) unter einem Winkel α kleiner 90° zueinander verlaufen,
so daß die Seitenplatten (9, 10, 11, 12) gehrungsfrei miteinander verbunden sind.

10. Luft- oder Kabelkanalbauteil nach Anspruch 9, **dadurch gekennzeichnet, daß** der Kanaleingang (13) und der Kanalausgang (14) unter einem Winkel zueinander oder axial versetzt zueinander angeordnet sind.

11. Luft- oder Kabelkanalbauteil nach Anspruch 10, **dadurch gekennzeichnet, daß** der Kanaleingang (13) und der Kanalausgang (14) unter einem Winkel ungleich 90° zueinander angeordnet sind.

12. Luft- oder Kabelkanalbauteil nach einem der Ansprüche 9 bis 11, **dadurch gekennzeichnet, daß** der Querschnitt des Kanaleingangs (13) ungleich dem Querschnitt des Kanalausgangs (14) ist.
